# EUROPEAN PATENT APPLICATION

(11) **EP 2 693 301 A1**
(43) Date of publication of application: **05.02.2014**
(21) Application number: 13178476.1
(22) Date of filing: 30.07.2013
(51) Int. Cl.: G06F 3/01, G06K 9/00

(54) **Method and apparatus for identifying the posture of an object using ultrasonic waves**

(30) Priority: 31.07.2012 CN 201210269089
(71) Applicant: Huawei Device Co., Ltd., Longgang District Shenzhen Guangdong 518129 (CN)
(72) Inventor: Kang, Junteng, 518129 Shenzhen (CN); Shan, Haibo, 518129 Shenzhen (CN); Chen, Wenhao, 518129 Shenzhen (CN)
(74) Representative: Thun, Clemens

(57) **Abstract**

The present invention discloses a method and an apparatus for identifying a posture of an object, and belongs to the field of identification technologies. The method includes: obtaining information about sending an ultrasonic wave by ultrasonic transmitters and obtaining information about receiving the ultrasonic wave by ultrasonic receivers, where the ultrasonic transmitters are fixed on an object to be identified, the number of the ultrasonic receivers is at least three; and identifying a posture of the object to be identified according to the obtained information about sending an ultrasonic wave by the ultrasonic transmitters and information about receiving the ultrasonic wave by ultrasonic receivers. Through fixing ultrasonic transmitters on an object to be identified, the present invention identifies the posture of the object according to information about sending an ultrasonic wave by the ultrasonic transmitters and information about receiving the ultrasonic wave by ultrasonic receivers. Because an ultrasonic wave is not interfered by light, a heat source, or other factors, reliability of posture identification can be improved; because an ultrasonic wave has good directionality and penetrability and accordingly has a high accuracy for catching uniform motion and micro motion, accuracy of posture identification of an object can be improved.

## Description

### TECHNICAL FIELD

The present invention relates to the field of identification technologies, and in particular, to a method and an apparatus for identifying a posture.

### BACKGROUND

With the continuous development of sensing technologies, types of motion sensing technologies become more diversified. By using sensing technologies to identify body postures, people may directly use their bodies to perform corresponding functional operations instead of being limited to use handles, key boards, and other devices to execute the corresponding functions. Therefore, application scope of posture identification technologies is becoming much broader.

In the prior art, an infrared sensor, an inertial sensor integrated with an accelerometer and a gyroscope to be multi-functional, an optical-sensor-based somatosensory control system, and the like are used for body posture identification.

In the implementation of the present invention, the inventor finds at least the following problems in the prior art:
The infrared sensing technology is susceptible to interference of light, heat source, an accelerometer and a gyroscope cannot accurately determine uniform motion, and an optical sensor has a low accuracy for catching micro motion. Therefore, methods for identifying a posture used in the prior art do not have a high reliability and accuracy thereof cannot be ensured.

### SUMMARY

In view of the above, embodiments of the present invention provide a method and an apparatus for identifying a posture to solve the problem that existing methods for identifying a posture do not have a high reliability and accuracy thereof cannot be ensured. The technical solutions are as follows:
In one aspect, a method for identifying a posture is provided, including:
obtaining information about sending an ultrasonic wave by one or more ultrasonic transmitters and obtaining information about receiving the ultrasonic wave by ultrasonic receivers, where the one or more ultrasonic transmitters are fixed on an object to be identified, the number of the one or more ultrasonic transmitters is at least one, and the number of the ultrasonic receivers is at least three; and
identifying a posture of the object to be identified according to the obtained information about sending an ultrasonic wave by one or more ultrasonic transmitters and information
about receiving the ultrasonic wave by ultrasonic receivers.

Optionally, the obtaining information about sending an ultrasonic wave by one or more ultrasonic transmitters specifically includes:
obtaining information about sending an ultrasonic wave in Code Division Multiple Access mode by at least two ultrasonic transmitters when the number of the ultrasonic transmitters is at least two, where the at least two ultrasonic transmitters are fixed at different positions of the object to be identified.

Optionally, ultrasonic waves transmitted by different ultrasonic transmitters correspond to different identification codes.

The obtaining information about sending an ultrasonic wave by one or more ultrasonic transmitters and obtaining information about receiving the ultrasonic wave by ultrasonic receivers specifically include:
obtaining time of sending an ultrasonic wave by each ultrasonic transmitter and time of receiving the ultrasonic wave that each ultrasonic transmitter sends by each ultrasonic receiver, according to an identification code corresponding to the ultrasonic wave sent by each ultrasonic transmitter

The identifying a posture of the object to be identified according to the obtained information about sending an ultrasonic wave by one or more ultrasonic transmitters and information about receiving the ultrasonic wave by ultrasonic receivers specifically includes:
identifying the posture of the object to be identified according to the obtained time of sending the ultrasonic wave by each ultrasonic transmitter and time of receiving the ultrasonic wave that each ultrasonic transmitter sends by each ultrasonic receiver.

Optionally, the obtaining time of sending an ultrasonic wave by each ultrasonic transmitter specifically includes:
obtaining clock information carried when each ultrasonic transmitter sends the ultrasonic wave, where the clock information records time of sending the ultrasonic wave by each ultrasonic transmitter; and
obtaining time of sending the ultrasonic wave by each ultrasonic transmitter according to the clock information carried when each ultrasonic transmitter sends the ultrasonic wave.

Optionally, the identifying the posture of the object to be identified according to the obtained time of sending the ultrasonic wave by each ultrasonic transmitter and time of receiving the ultrasonic wave that each ultrasonic transmitter sends by each ultrasonic receiver specifically includes:
obtaining time of transmitting the ultrasonic wave from each ultrasonic transmitter to each ultrasonic receiver according to the obtained time of sending the ultrasonic wave by each ultrasonic transmitter and time of receiving the ultrasonic wave that each ultrasonic transmitter sends by each ultrasonic receiver;
determining a distance between each ultrasonic transmitter and each ultrasonic receiver according to the time of transmitting the ultrasonic wave from each ultrasonic transmitter to each ultrasonic receiver and transmission speed of the ultrasonic wave; and
identifying the posture of the object to be identified according to the distance between each ultrasonic transmitter and each ultrasonic receiver.

In another aspect, an apparatus for identifying a posture is provided, including:
a first obtaining module, configured to obtain information about sending an ultrasonic wave by one or more ultrasonic transmitters, where the one or more ultrasonic transmitters are fixed on an object to be identified and the number of the one or more ultrasonic transmitters is at least one;
a second obtaining module, configured to obtain information about receiving the ultrasonic wave by ultrasonic receivers, where the number of the ultrasonic receivers is at least three; and
an identification module, configured to identify a posture of the object to be identified according to information about sending an ultrasonic wave by one or more ultrasonic transmitters obtained by the first obtaining module and information about receiving the ultrasonic wave by ultrasonic receivers obtained by the second obtaining module.

Optionally, the first obtaining module is specifically configured to obtain information about sending an ultrasonic wave in Code Division Multiple Access mode by at least two ultrasonic transmitters when the number of the ultrasonic transmitters is at least two, where the at least two ultrasonic transmitters are fixed at different positions of the object to be identified.

Optionally, ultrasonic waves transmitted by different ultrasonic transmitters correspond to different identification codes.

The first obtaining module is specifically configured to obtain time of sending an ultrasonic wave by each ultrasonic transmitter according to an identification code corresponding to the ultrasonic wave sent by each ultrasonic transmitter.

The second obtaining module is specifically configured to obtain time of receiving the ultrasonic wave that each ultrasonic transmitter sends by each ultrasonic receiver according to an identification code corresponding to the ultrasonic wave sent by each ultrasonic transmitter.

The identification module is specifically configured to identify the posture of the object to be identified according to the time of sending the ultrasonic wave by each ultrasonic transmitter obtained by the first obtaining module and the time of receiving the ultrasonic wave that each ultrasonic transmitter sends by each ultrasonic receiver obtained by the second obtaining module.

Optionally, the first obtaining module specifically includes:
a first obtaining unit, configured to obtain clock information carried when each ultrasonic transmitter sends the ultrasonic wave, where the clock information records time of sending the ultrasonic wave by each ultrasonic transmitter; and
a second obtaining unit, configured to obtain time of sending the ultrasonic wave by each ultrasonic transmitter according to the clock information carried when each ultrasonic transmitter sends the ultrasonic wave and obtained by the first obtaining unit.

Optionally, the identification module specifically includes:
an obtaining unit, configured to obtain time of transmitting the ultrasonic wave from each ultrasonic transmitter to each ultrasonic receiver according to the time of sending the ultrasonic wave by each ultrasonic transmitter obtained by the first obtaining module and the time of receiving the ultrasonic wave that each ultrasonic transmitter sends by each ultrasonic receiver obtained by the second obtaining module;
a determination unit, configured to determine a distance between each ultrasonic transmitter and each ultrasonic receiver according to the time of transmitting the ultrasonic wave from each ultrasonic transmitter to each ultrasonic receiver obtained by the obtaining unit and transmission speed of the ultrasonic wave; and
an identification unit, configured to identify the posture of the object to be identified according to the distance between each ultrasonic transmitter and each ultrasonic receiver determined by the determination unit.

Technical solutions provided by the embodiments of the present invention have the following beneficial effects:
Because an ultrasonic wave is not interfered by light, a heat source, or other external factors, reliability of posture identification can be improved by fixing one or more ultrasonic transmitters on the object to be identified and identifying the posture of the object to be identified according to obtained information about sending an ultrasonic wave by one or more ultrasonic transmitters and information about receiving the ultrasonic wave by ultrasonic receivers; additionally, because an ultrasonic wave has good directionality and penetrability and accordingly has a high accuracy for catching uniform motion and micro motion, accuracy of posture identification can be improved.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a method for identifying a posture according to Embodiment 1 of the present invention;
FIG. 2 is a flowchart of a method for identifying a posture according to Embodiment 2 of the present invention;
FIG. 3 is a schematic diagram of a scenario for identifying a posture according to Embodiment 2 of the present invention;
FIG. 4 is a structural schematic diagram of an apparatus for identifying a posture according to Embodiment 3 of the present invention;
FIG. 5 is a structural schematic diagram of a first obtaining module according to Embodiment 3 of the present invention; and
FIG. 6 is a structural schematic diagram of an identification module according to Embodiment 3 of the present invention.

### DESCRIPTION OF EMBODIMENTS

To make the objectives, technical solutions, and advantages of the embodiments of the present invention more clear, the following further describes the embodiments of the present invention in detail with reference to the accompanying drawings.

### Embodiment 1

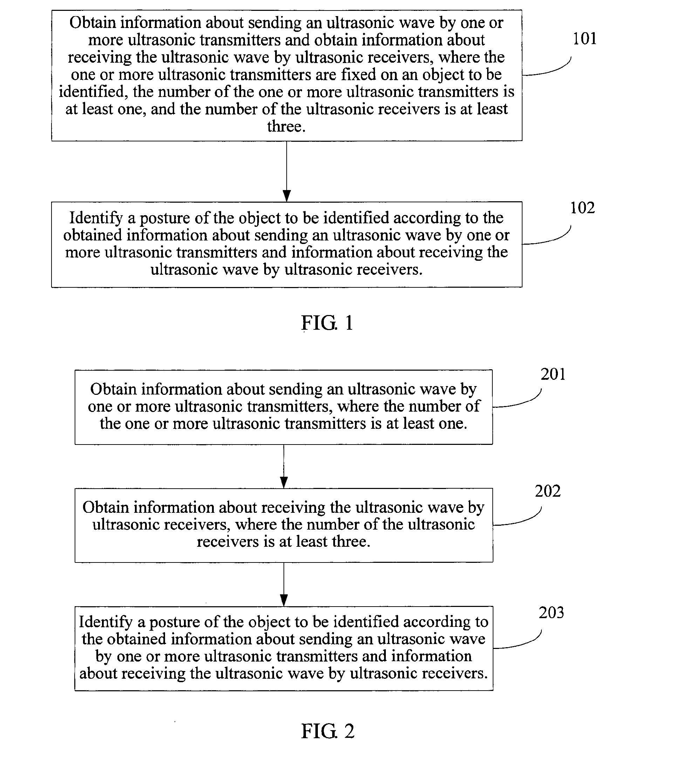

The embodiment provides a method for identifying a posture. Referring to FIG. 1, the procedure of the method provided by the embodiment is specifically as follows:
Step 101: Obtain information about sending an ultrasonic wave by one or more ultrasonic transmitters and obtain information about receiving the ultrasonic wave by ultrasonic receivers, where the one or more ultrasonic transmitters are fixed on an object to be identified, the number of the one or more ultrasonic transmitters is at least one, and the number of the ultrasonic receivers is at least three.

The obtaining information about sending an ultrasonic wave by one or more ultrasonic transmitters specifically includes:
obtaining information about sending an ultrasonic wave in Code Division Multiple Access mode by at least two ultrasonic transmitters when the number of the ultrasonic transmitters is at least two, where the at least two ultrasonic transmitters are fixed at different positions of the object to be identified.

Optionally, ultrasonic waves transmitted by different ultrasonic transmitters correspond to different identification codes.

The obtaining information about sending an ultrasonic wave by one or more ultrasonic transmitters and obtaining information about receiving the ultrasonic wave by ultrasonic receivers specifically include:
obtaining time of sending an ultrasonic wave by each ultrasonic transmitter and time of receiving the ultrasonic wave that each ultrasonic transmitter sends by each ultrasonic receiver according to an identification code corresponding to the ultrasonic wave sent by each ultrasonic transmitter.
Step 102: Identify a posture of the object to be identified according to the obtained information about sending an ultrasonic wave by one or more ultrasonic transmitters and information about receiving the ultrasonic wave by ultrasonic receivers.

Optionally, the identifying a posture of the object to be identified according to the obtained information about sending an ultrasonic wave by one or more ultrasonic transmitters and information about receiving the ultrasonic wave by ultrasonic receivers includes but is not limited to:
identifying the posture of the object to be identified according to the obtained time of sending the ultrasonic wave by each ultrasonic transmitter and time of receiving the ultrasonic wave that each ultrasonic transmitter sends by each ultrasonic receiver.

Optionally, the obtaining time of sending an ultrasonic wave by each ultrasonic transmitter includes but is not limited to:
obtaining clock information carried when each ultrasonic transmitter sends the ultrasonic wave, where the clock information records time of sending the ultrasonic wave by each ultrasonic transmitter; and
obtaining time of sending the ultrasonic wave by each ultrasonic transmitter according to the clock information carried when each ultrasonic transmitter sends the ultrasonic wave.

Optionally, the identifying the posture of the object to be identified according to the obtained time of sending the ultrasonic wave by each ultrasonic transmitter and time of receiving the ultrasonic wave that each ultrasonic transmitter sends by each ultrasonic receiver includes but is not limited to:
obtaining time of transmitting the ultrasonic wave from each ultrasonic transmitter to each ultrasonic receiver according to the obtained time of sending the ultrasonic wave by each ultrasonic transmitter and time of receiving the ultrasonic wave that each ultrasonic transmitter sends by each ultrasonic receiver;
determining a distance between each ultrasonic transmitter and each ultrasonic receiver according to the time of transmitting the ultrasonic wave from each ultrasonic transmitter to each ultrasonic receiver and transmission speed of the ultrasonic wave; and
identifying the posture of the object to be identified according to the distance between each ultrasonic transmitter and each ultrasonic receiver.

Because an ultrasonic wave are not interfered by light, heat source, or other external factors, the method provided by the embodiment is capable of improving reliability of posture identification by fixing one or more ultrasonic transmitters on the object to be identified, obtaining information about receiving the ultrasonic wave by ultrasonic receivers, and identifying the posture of the object to be identified according to the obtained information; additionally, because an ultrasonic wave have good directionality and penetrability and accordingly have a high accuracy for catching uniform motion and micro motion, the method provided by the embodiment is capable of improving accuracy of posture identification.

In order to more clearly expound the method for identifying a posture provided by Embodiment 1, with reference to content in Embodiment 1, Embodiment 2 provides an example to describe the method in detail. Embodiment 2 is as follows.

### Embodiment 2

The embodiment provides a method for identifying a posture. With reference to content in Embodiment 1 and for an easy description, the embodiment uses fixing one or more ultrasonic transmitters on an object to be identified and deploying ultrasonic receivers on a peer end of the object to be identified as an example to illustrate the method for identifying a posture provided by the embodiment. Referring to FIG. 2, the procedure of the method provided by the embodiment is specifically as follows:
Step 201: Obtain information about sending an ultrasonic wave by one or more ultrasonic transmitters, where the number of the one or more ultrasonic transmitters is at least one.
For this step, the embodiment does not limit the number of one or more ultrasonic transmitters.

When the number of the ultrasonic transmitters is at least two, to differentiate the obtained information about sending an ultrasonic wave by each ultrasonic transmitter, when obtaining information about sending an ultrasonic wave by one or more ultrasonic transmitters, this step includes but is not limited to:
obtaining information about sending an ultrasonic wave in Code Division Multiple Access mode by at least two ultrasonic transmitters, where the at least two ultrasonic transmitters are fixed at different positions of the object to be identified.

Further, the obtained information about sending an ultrasonic wave by one or more ultrasonic transmitters includes but is not limited to time of sending an ultrasonic wave by one or more ultrasonic transmitters; in addition, the information about sending an ultrasonic wave by one or more ultrasonic transmitters may also be other information, and the embodiment does not limit the information specifically. Obtaining time of sending an ultrasonic wave by one or more ultrasonic transmitters is used as an example herein. Ultrasonic waves transmitted by different ultrasonic transmitters correspond to different identification codes. In this step, when obtaining information about sending an ultrasonic wave by one or more ultrasonic transmitters, time of sending an ultrasonic wave by each ultrasonic transmitter is obtained according to an identification code corresponding to the ultrasonic wave sent by each ultrasonic transmitter.

An identification code corresponding to an ultrasonic wave sent by an ultrasonic transmitter may be used as the identification code corresponding to the ultrasonic transmitter that sends the ultrasonic wave. The identification code may specifically be numbered. For example, number 1 indicates ultrasonic transmitter 1, number 2 indicates ultrasonic transmitter 2, number 3 indicates ultrasonic transmitter 3, and so on. In addition, an identification code corresponding to an ultrasonic wave sent by an ultrasonic transmitter may also be a corresponding identifier. For example, characters X, Y, Z, and the like identify different ultrasonic transmitters. The embodiment does not limit a specific identification code corresponding to an ultrasonic wave sent by an ultrasonic transmitter. An ultrasonic wave sent by the same ultrasonic transmitter has the same identification code; ultrasonic waves sent by different ultrasonic transmitters have different identification codes.

Because each ultrasonic wave corresponds to one identification code, in this step, time of sending an ultrasonic wave by each ultrasonic transmitter may be obtained, according to the identification code corresponding to the ultrasonic wave sent by each ultrasonic transmitter, to differentiate ultrasonic waves sent by different ultrasonic transmitters. To obtain time of sending an ultrasonic wave by one or more ultrasonic transmitters, when an ultrasonic transmitter sends an ultrasonic wave, clock information for recording time of sending an ultrasonic wave may be carried. When obtaining time of sending an ultrasonic wave by each ultrasonic transmitter, this step includes but is not limited to:
obtaining clock information carried when each ultrasonic transmitter sends the ultrasonic wave, where the clock information records time of sending the ultrasonic wave by each ultrasonic transmitter; and obtaining time of sending the ultrasonic wave by each ultrasonic transmitter according to the clock information carried when each ultrasonic transmitter sends the ultrasonic wave.

Certainly, besides obtaining time of sending an ultrasonic wave by one or more ultrasonic transmitters through the foregoing method of sending clock information, other methods of obtaining time of sending an ultrasonic wave by one or more ultrasonic transmitters may be used and the embodiment imposes no limitation on other methods.

Step 202: Obtain information about receiving the ultrasonic wave by ultrasonic receivers, where the number of the ultrasonic receivers is at least three.

Specifically, an ultrasonic wave received by ultrasonic receivers is the ultrasonic wave sent by one or more ultrasonic transmitters in step 201. In step 202, when the number of ultrasonic transmitters is at least two, because ultrasonic waves sent by different ultrasonic transmitters correspond to different identification codes in step 201, time of receiving the ultrasonic wave that each ultrasonic transmitter sends by each ultrasonic receiver may be obtained according to an identification code corresponding to the ultrasonic wave sent by each ultrasonic transmitter when obtaining information about receiving an ultrasonic wave by ultrasonic receivers. As a result, for each ultrasonic wave received by an ultrasonic receiver, the ultrasonic transmitter may be identified. The obtained information about receiving an ultrasonic wave by ultrasonic receivers includes but limited to time of receiving an ultrasonic wave by ultrasonic receivers; in addition, the information about receiving an ultrasonic wave by ultrasonic receivers may also be other information, and the embodiment does not limit the information specifically. Obtaining time of receiving an ultrasonic wave by ultrasonic receivers is used as an example herein.

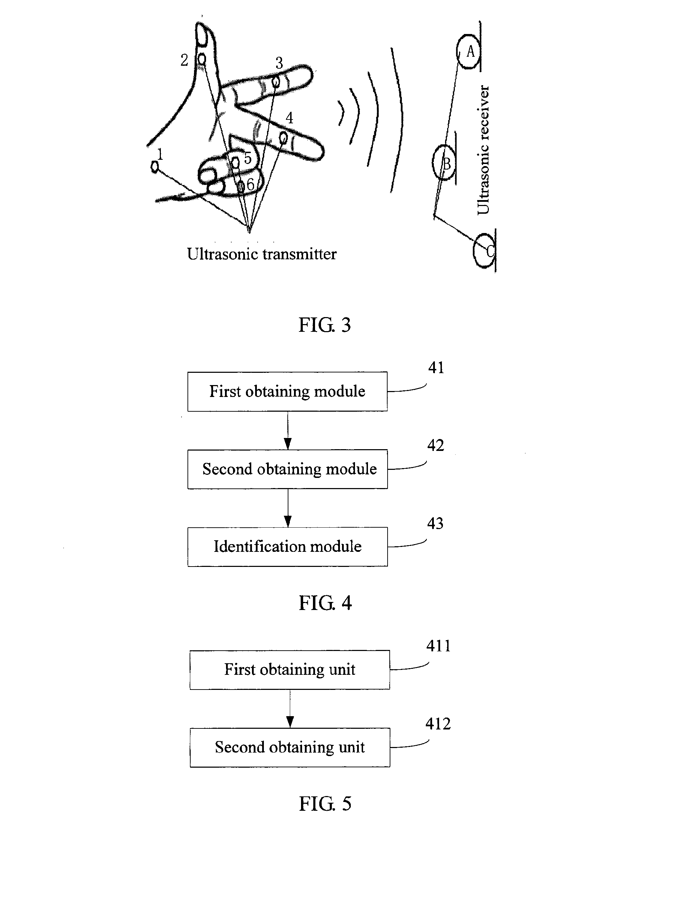

In addition, the embodiment does not impose limitations on the number of ultrasonic receivers. To accurately identify a posture of an object to be identified, the number of ultrasonic receivers in the embodiment is at least three. For an easy description, the embodiment uses the posture identification scenario shown in FIG. 3 as an example. In FIG. 3, six ultrasonic transmitters are fixed at a few positions of the object to be identified and are numbered from 1 to 6, and three ultrasonic receivers are deployed at the peer end of the object to be identified and are numbered with A, B, and C. When obtaining information about receiving the ultrasonic waves that each ultrasonic transmitter sends in Code Division Multiple Access mode by ultrasonic receivers, the obtained information includes but is not limited to the time of receiving the ultrasonic waves by ultrasonic receivers and the identification code of the ultrasonic transmitter that sends the ultrasonic waves. Certainly, other information may also be contained. The embodiment does not limit the specific obtained information. In this example, the obtained information is the time of sending an ultrasonic wave by each ultrasonic transmitter, the time of receiving the ultrasonic wave that each ultrasonic transmitter sends by each ultrasonic receiver, and the identification code corresponding to the ultrasonic wave. In this example, based on the frequency at which one or more ultrasonic transmitters send an ultrasonic wave, each ultrasonic transmitter sends an ultrasonic wave at the first time t1, the second time t2, and the third time t3, and each transmitter receiver receives an ultrasonic wave sent by each ultrasonic transmitter three times. Obtained time of receiving an ultrasonic wave by each ultrasonic receiver after each ultrasonic transmitter sends the ultrasonic wave at the first time t1 is shown in table 1; obtained time of receiving an ultrasonic wave by each ultrasonic receiver after each ultrasonic transmitter sends the ultrasonic wave at the second time t2 is shown in table 2; obtained time of receiving an ultrasonic wave by each ultrasonic receiver after each ultrasonic transmitter sends the ultrasonic wave at the third time t3 is shown in table 3.

**Table 1**

| | **Ultrasonic receiver A** | **Ultrasonic receiver B** | **Ultrasonic receiver C** |
|---|---|---|---|
| Ultrasonic transmitter 1 | T₁₁ₐ | T_{11b} | T_{11c} |
| Ultrasonic transmitter 2 | T₁₂ₐ | T_{12b} | T_{12c} |
| Ultrasonic transmitter 3 | T₁₃ₐ | T_{13b} | T_{13c} |
| Ultrasonic transmitter 4 | T₁₄ₐ | T_{14b} | T_{14c} |
| Ultrasonic transmitter 5 | T₁₅ₐ | T_{15b} | T_{15c} |
| Ultrasonic transmitter 6 | T₁₆ₐ | T_{16b} | T_{16c} |

**Table 2**

| | **Ultrasonic receiver B** | **Ultrasonic receiver B** | **Ultrasonic receiver C** |
|---|---|---|---|
| Ultrasonic transmitter 1 | T₂₁ₐ | T_{21b} | T_{21c} |
| Ultrasonic transmitter 2 | T₂₂ₐ | T_{22b} | T_{22c} |
| Ultrasonic transmitter 3 | T₂₃ₐ | T_{23b} | T_{23c} |
| Ultrasonic transmitter 4 | T₂₄ₐ | T_{24b} | T_{24c} |
| Ultrasonic transmitter 5 | T₂₅ₐ | T_{25b} | T_{25c} |
| Ultrasonic transmitter 6 | T₂₆ₐ | T_{26b} | T_{26c} |

**Table 3**

| | **Ultrasonic receiver A** | **Ultrasonic receiver B** | **Ultrasonic receiver C** |
|---|---|---|---|
| Ultrasonic transmitter 1 | T₃₁ₐ | T₃₁₆ | T_{31c} |
| Ultrasonic transmitter 2 | T₃₂ₐ | T₃₂₆ | T_{32c} |
| Ultrasonic transmitter 3 | T₃₃ₐ | T_{33b} | T_{33c} |
| Ultrasonic transmitter 4 | T₃₄ₐ | T_{34b} | T_{34c} |
| Ultrasonic transmitter 5 | T₃₅ₐ | T_{35b} | T_{35c} |
| Ultrasonic transmitter 6 | T₃₆ₐ | T_{36b} | T_{36c} |

Step 203: Identify a posture of the object to be identified according to the obtained information about sending an ultrasonic wave by one or more ultrasonic transmitters and information about receiving the ultrasonic wave by ultrasonic receivers.

In this step, the one or more ultrasonic transmitters are fixed on the same object to be identified, and transmission speeds of ultrasonic waves sent by ultrasonic transmitters in the same environment are basically the same. In a situation where all the ultrasonic transmitters send an ultrasonic wave at the same frequency and that distances from different ultrasonic transmitters to the same ultrasonic receiver are different, time of receiving an ultrasonic wave sent by each ultrasonic transmitter for the ultrasonic receiver is different. When the method provided by the embodiment is used to identify the posture of an object to be identified according to obtained information, the obtained information for posture identification includes but is not limited to time of sending an ultrasonic wave by each ultrasonic transmitter and time of receiving an ultrasonic wave that each ultrasonic transmitter sends by each ultrasonic receiver.

The embodiment does not limit the mode of identifying the posture of an object to be identified according to obtained time of sending the ultrasonic wave by each ultrasonic transmitter and time of receiving the ultrasonic wave that each ultrasonic transmitter sends by each ultrasonic receiver. After obtaining time of sending an ultrasonic wave by one or more ultrasonic transmitters in step 201 and time of receiving the ultrasonic wave by ultrasonic receivers in step 202, the identifying the posture of the object to be identified according to the obtained information in this step includes but is not limited to the following modes:
obtaining time of transmitting the ultrasonic wave from each ultrasonic transmitter to each ultrasonic receiver according to the obtained time of sending the ultrasonic wave by each ultrasonic transmitter and time of receiving the ultrasonic wave that each ultrasonic transmitter sends by each ultrasonic receiver;
determining a distance between each ultrasonic transmitter and each ultrasonic receiver according to the time of transmitting the ultrasonic wave from each ultrasonic transmitter to each ultrasonic receiver and transmission speed of the ultrasonic wave; and
identifying the posture of the object to be identified according to the distance between each ultrasonic transmitter and each ultrasonic receiver.

For an easy understanding, specific implementation of this step is illustrated with data in tables 1 to 3 in step 202 as an example. In table 1, time of receiving an ultrasonic wave that ultrasonic transmitter 1 sends by ultrasonic receiver A is T_{11a,} and the ultrasonic wave are sent by ultrasonic transmitter 1 at the first time t1. When the transmission speed of an ultrasonic wave is, for example, 340 m/s and time of transmitting an ultrasonic wave from ultrasonic transmitter 1 to ultrasonic receiver A is (T₁₁ₐ₋ₜ₁), a distance from ultrasonic transmitter 1 to ultrasonic receiver A is (T₁₁ₐ-t1)*340; in the similar way, a distance from ultrasonic transmitter 1 to ultrasonic receiver B is (T_{11b}-t1)*340; a distance from ultrasonic transmitter 1 to ultrasonic receiver C is (T_{11c}-t1)*340. In a situation where positions of ultrasonic receivers are known and fixed, the spatial position of ultrasonic transmitter 1 corresponding to ultrasonic receivers A, B, and C at the first time t1 may be determined according to distances between ultrasonic transmitter 1 and ultrasonic receivers A, B, and C. In the similar way, the spatial position of each ultrasonic transmitter corresponding to each ultrasonic receiver may be determined by separately determining the distance between each ultrasonic transmitter and each ultrasonic receiver. After position distribution of all ultrasonic transmitters at the first time t1 is obtained, the posture of the object to be identified may be identified according to the position distribution of all ultrasonic transmitters at the first time t1. Certainly, besides identifying the posture of the object to be identified at t1, the foregoing method may be used to identify the posture of the object to be identified at other time, which is not described herein.

In the method provided by the embodiment, because an ultrasonic wave is not interfered by light, a heat source, or other external factors, reliability of posture identification can be improved by fixing one or more ultrasonic transmitters on the object to be identified and identifying the posture of the object to be identified according to obtained information about sending an ultrasonic wave by one or more ultrasonic transmitters and information about receiving the ultrasonic wave by ultrasonic receivers; additionally, because an ultrasonic wave has good directionality and penetrability and accordingly has a high accuracy for catching uniform motion and micro motion, accuracy of posture identification can be improved.

### Embodiment 3

The embodiment provides an apparatus for identifying a posture, which is configured to implement the method for identifying a posture provided in Embodiment 1 or Embodiment 2. Referring to FIG. 4, the apparatus includes:
a first obtaining module 41, configured to obtain information about sending an ultrasonic wave by one or more ultrasonic transmitters, where the one or more ultrasonic transmitters are fixed on an object to be identified and the number of the one or more ultrasonic transmitters is at least one;
an second obtaining module 42, configured to obtain information about receiving the ultrasonic wave by ultrasonic receivers, where the number of the ultrasonic receivers is at least three; and
an identification module 43, configured to identify a posture of the object to be identified according to information about sending an ultrasonic wave by one or more ultrasonic transmitters obtained by the first obtaining module 41 and information about receiving the ultrasonic wave by ultrasonic receivers obtained by the second obtaining module 42.

Optionally, the first obtaining module 41 is specifically configured to obtain information about sending an ultrasonic wave in Code Division Multiple Access mode by at least two ultrasonic transmitters when the number of the ultrasonic transmitters is at least two, where the at least two ultrasonic transmitters are fixed at different positions of the object to be identified.

Optionally, ultrasonic waves transmitted by different ultrasonic transmitters correspond to different identification codes.

The first obtaining module 41 is specifically configured to obtain time of sending an ultrasonic wave by each ultrasonic transmitter according to an identification code corresponding to the ultrasonic wave sent by each ultrasonic transmitter.

The second obtaining module 42 is specifically configured to obtain time of receiving the ultrasonic wave that each ultrasonic transmitter sends by each ultrasonic receiver according to an identification code corresponding to the ultrasonic wave sent by each ultrasonic transmitter.

The identification module 43 is specifically configured to identify the posture of the object to be identified according to the time of sending the ultrasonic wave by each ultrasonic transmitter obtained by the first obtaining module 41 and the time of receiving the ultrasonic wave that each ultrasonic transmitter sends by each ultrasonic receiver obtained by the second obtaining module 42.

Optionally, referring to FIG. 5, the first obtaining module 41 specifically includes:
a first obtaining unit 411, configured to obtain clock information carried when each ultrasonic transmitter sends the ultrasonic wave, where the clock information records time of sending an ultrasonic wave by each ultrasonic transmitter; and
a second obtaining unit 412, configured to obtain time of sending the ultrasonic wave by each ultrasonic transmitter according to the clock information carried when each ultrasonic transmitter sends the ultrasonic wave and obtained by the first obtaining unit 411.

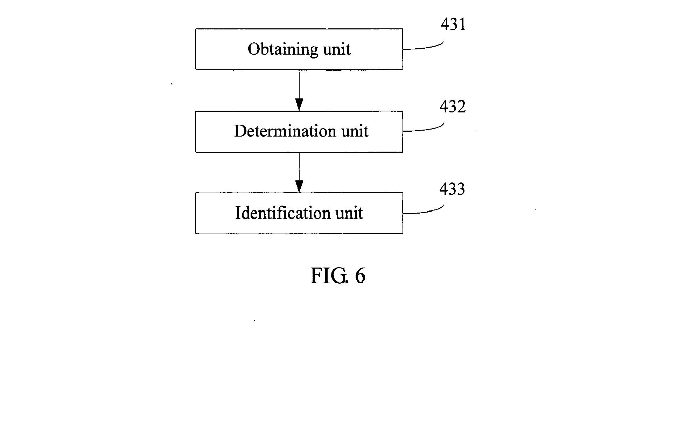

Optionally, referring to FIG. 6, the identification module 43 specifically includes:
an obtaining unit 431, configured to obtain time of transmitting the ultrasonic wave from each ultrasonic transmitter to each ultrasonic receiver according to the time of sending the ultrasonic wave by each ultrasonic transmitter obtained by the first obtaining module 41 and the time of receiving the ultrasonic wave that each ultrasonic transmitter sends by each ultrasonic receiver obtained by the second obtaining module 42;
a determination unit 432, configured to determine a distance between each ultrasonic transmitter and each ultrasonic receiver according to the time of transmitting the ultrasonic wave from each ultrasonic transmitter to each ultrasonic receiver obtained by the obtaining unit 431 and transmission speed of the ultrasonic wave; and
an identification unit 433, configured to identify the posture of the object to be identified according to the distance between each ultrasonic transmitter and each ultrasonic receiver determined by the determination unit 432.

The apparatus provided by the embodiment, because an ultrasonic wave is not interfered by light, a heat source, or other external factors, is capable of improving reliability of posture identification by fixing one or more ultrasonic transmitters on the object to be identified and identifying the posture of the object to be identified according to obtained information about sending an ultrasonic wave by one or more ultrasonic transmitters and information about receiving the ultrasonic wave by ultrasonic receivers; additionally, because an ultrasonic wave has good directionality and penetrability and accordingly has a high accuracy for catching uniform motion and micro motion, accuracy of posture identification can be improved.

### Embodiment 4

The embodiment provides an apparatus for identifying a posture, including a processor, configured to implement the method for identifying a posture provided in Embodiment 1 or Embodiment 2.

The processor is configured to obtain information about sending an ultrasonic wave by one or more ultrasonic transmitters and obtain information about receiving the ultrasonic wave by ultrasonic receivers, where the one or more ultrasonic transmitters are fixed on an object to be identified, the number of the one or more ultrasonic transmitters is at least one, and the number of the ultrasonic receivers is at least three; and identify a posture of the object to be identified according to the obtained information about sending an ultrasonic wave by one or more ultrasonic transmitters and information about receiving the ultrasonic wave by ultrasonic receivers.

Optionally, when obtaining information about sending an ultrasonic wave by one or more ultrasonic transmitters, the processor is specifically configured to obtain information about sending an ultrasonic wave in Code Division Multiple Access mode by at least two ultrasonic transmitters when the number of the ultrasonic transmitters is at least two, where the at least two ultrasonic transmitters are fixed at different positions of the object to be identified.

Optionally, ultrasonic waves transmitted by different ultrasonic transmitters correspond to different identification codes; when obtaining information about sending an ultrasonic wave by one or more ultrasonic transmitters and information about receiving the ultrasonic wave by ultrasonic receivers, the processor is specifically configured to obtain time of sending an ultrasonic wave by each ultrasonic transmitter and time of receiving the ultrasonic wave that each ultrasonic transmitter sends by each ultrasonic receiver according to an identification code corresponding to the ultrasonic wave sent by each ultrasonic transmitter;

Optionally, when identifying the posture of the object to be identified according to the obtained information, the processor is specifically configured to identify the posture of the object to be identified according to the obtained time of sending the ultrasonic wave by each ultrasonic transmitter and time of receiving the ultrasonic wave that each ultrasonic transmitter sends by each ultrasonic receiver.

Optionally, when obtaining time of sending an ultrasonic wave by each ultrasonic transmitter, the processor is specifically configured to obtain clock information carried when each ultrasonic transmitter sends the ultrasonic wave, where the clock information records time of sending the ultrasonic wave by each ultrasonic transmitter; and obtain time of sending the ultrasonic wave by each ultrasonic transmitter according to the clock information carried when each ultrasonic transmitter sends the ultrasonic wave.

Optionally, when identifying the posture of the object to be identified according to the obtained time of sending an ultrasonic wave by each ultrasonic transmitter and time of receiving the ultrasonic wave that each ultrasonic transmitter sends by each ultrasonic receiver, the processor is specifically configured to obtain time of transmitting the ultrasonic wave from each ultrasonic transmitter to each ultrasonic receiver according to the obtained time of sending the ultrasonic wave by each ultrasonic transmitter and time of receiving the ultrasonic wave that each ultrasonic transmitter sends by each ultrasonic receiver; determine a distance between each ultrasonic transmitter and each ultrasonic receiver according to the time of transmitting the ultrasonic wave from each ultrasonic transmitter to each ultrasonic receiver and transmission speed of the ultrasonic wave; and identify the posture of the object to be identified according to the distance between each ultrasonic transmitter and each ultrasonic receiver.

The apparatus provided by the embodiment, because an ultrasonic wave is not interfered by light, a heat source, or other external factors, is capable of improving reliability of posture identification by fixing one or more ultrasonic transmitters on the object to be identified and identifying the posture of the object to be identified according to obtained information about sending an ultrasonic wave by one or more ultrasonic transmitters and information about receiving the ultrasonic wave by ultrasonic receivers; additionally, because an ultrasonic wave has good directionality and penetrability and accordingly has a high accuracy for catching uniform motion and micro motion, accuracy of posture identification can be improved.

It should be noted that: when the apparatus for identifying a posture provided in the foregoing embodiment performs posture identification, the foregoing function modules are taken as an example for description. In practical application, the foregoing functions may be undertaken by different function modules according to requirements, that is, the internal structure of the apparatus is divided into different function modules to implement all or part of the foregoing functions. In addition, the apparatus for identifying a posture provided in the preceding embodiments and posture identification method embodiments belong to the same idea. For the details of the specific implementation process, refer to the method embodiments. The specific implementation process is not described herein again.

Persons of ordinary skill in the art should understand that all or a part of the steps of the method in the embodiments may be implemented by hardware or a program instructing relevant hardware. The program may be stored in a computer readable storage medium. The storage medium may include a read-only memory, a magnetic disk, and an optical disk.

The foregoing descriptions are merely preferred embodiments of the present invention, but are not intended to limit the present invention. Any modification, equivalent replacement, or improvement derived within the principle of the present invention shall fall within the protection scope of the present invention.

## Claims

1. A method for identifying a posture, comprising:
obtaining information about sending an ultrasonic wave by one or more ultrasonic transmitters and obtaining information about receiving the ultrasonic wave by ultrasonic receivers, wherein the one or more ultrasonic transmitters are fixed on an object to be identified, the number of the one or more transmitters is at least one, and the number of the ultrasonic receivers is at least three; and
identifying a posture of the object to be identified according to the obtained information about sending an ultrasonic wave by one or more ultrasonic transmitters and information about receiving the ultrasonic wave by ultrasonic receivers.

2. The method according to claim 1, wherein the obtaining information about sending an ultrasonic wave by one or more ultrasonic transmitters specifically comprises:
obtaining information about sending an ultrasonic wave in Code Division Multiple Access mode by at least two ultrasonic transmitters when the number of the ultrasonic transmitters is at least two, wherein the at least two ultrasonic transmitters are fixed at different positions of the object to be identified.

3. The method according to claim 1 or 2, wherein ultrasonic waves transmitted by different ultrasonic transmitters correspond to different identification codes;
the obtaining information about sending an ultrasonic wave by one or more ultrasonic transmitters and obtaining information about receiving the ultrasonic wave by ultrasonic receivers specifically comprises:
obtaining time of sending an ultrasonic wave by each ultrasonic transmitter and time of receiving the ultrasonic wave that each ultrasonic transmitter sends by each ultrasonic receiver according to an identification code corresponding to the ultrasonic wave sent by each ultrasonic transmitter; and
the identifying a posture of the object to be identified according to the obtained information about sending an ultrasonic wave by one or more ultrasonic transmitters and information about receiving the ultrasonic wave by ultrasonic receivers specifically comprises:
identifying the posture of the object to be identified according to the obtained time of sending the ultrasonic wave by each ultrasonic transmitter and time of receiving the ultrasonic wave that each ultrasonic transmitter sends by each ultrasonic receiver.

4. The method according to claim 3, wherein the obtaining time of sending an ultrasonic wave by each ultrasonic transmitter specifically comprises:
obtaining clock information carried when each ultrasonic transmitter sends the ultrasonic wave, wherein the clock information records time of sending the ultrasonic wave by each ultrasonic transmitter; and
obtaining time of sending the ultrasonic wave by each ultrasonic transmitter according to the clock information carried when each ultrasonic transmitter sends the ultrasonic wave.

5. The method according to claim 3 or 4, wherein the identifying the posture of the object to be identified according to the obtained time of sending the ultrasonic wave by each ultrasonic transmitter and time of receiving the ultrasonic wave that each ultrasonic transmitter sends by each ultrasonic receiver further comprises:
obtaining time of transmitting the ultrasonic wave from each ultrasonic transmitter to each ultrasonic receiver according to the obtained time of sending the ultrasonic wave by each ultrasonic transmitter and time of receiving the ultrasonic wave that each ultrasonic transmitter sends by each ultrasonic receiver;
determining a distance between each ultrasonic transmitter and each ultrasonic receiver according to the time of transmitting the ultrasonic wave from each ultrasonic transmitter to each ultrasonic receiver and transmission speed of the ultrasonic wave; and
identifying the posture of the object to be identified according to the distance between each ultrasonic transmitter and each ultrasonic receiver.

6. An apparatus for identifying a posture, comprising:
a first obtaining module, configured to obtain information about sending an ultrasonic wave by one or more ultrasonic transmitters, wherein the one or more ultrasonic transmitters are fixed on an object to be identified and the number of the one or more ultrasonic transmitters is at least one;
a second obtaining module, configured to obtain information about receiving the ultrasonic wave by ultrasonic receivers, wherein the number of the ultrasonic receivers is at least three; and
an identification module, configured to identify a posture of the object to be identified according to information about sending an ultrasonic wave by one or more ultrasonic transmitters obtained by the first obtaining module and information about receiving the ultrasonic wave by ultrasonic receivers obtained by the second obtaining module.

7. The apparatus according to claim 6, wherein the first obtaining module is specifically configured to obtain information about sending an ultrasonic wave in Code Division Multiple Access mode by at least two ultrasonic transmitters when the number of the one or more ultrasonic transmitters is at least two, wherein the at least two ultrasonic transmitters are fixed at different positions of the object to be identified.

8. The apparatus according to claim 6 or 7, wherein ultrasonic waves transmitted by different ultrasonic transmitters correspond to different identification codes;
the first obtaining module is specifically configured to obtain time of sending an ultrasonic wave by each ultrasonic transmitter according to an identification code corresponding to the ultrasonic wave sent by each ultrasonic transmitter;
the second obtaining module is specifically configured to obtain time of receiving the ultrasonic wave that each ultrasonic transmitter sends by each ultrasonic receiver according to an identification code corresponding to the ultrasonic wave sent by each ultrasonic transmitter; and
the identification module is specifically configured to identify the posture of the object to be identified according to the time of sending the ultrasonic wave by each ultrasonic transmitter obtained by the first obtaining module and the time of receiving the ultrasonic wave that each ultrasonic transmitter sends by each ultrasonic receiver obtained by the second obtaining module.

9. The apparatus according to claim 8, wherein the first obtaining module further comprises:
a first obtaining unit, configured to obtain clock information carried when each ultrasonic transmitter sends the ultrasonic wave, wherein the clock information records time of sending the ultrasonic wave by each ultrasonic transmitter; and
a second obtaining unit, configured to obtain time of sending the ultrasonic wave by each ultrasonic transmitter according to the clock information carried when each ultrasonic transmitter sends the ultrasonic wave and obtained by the first obtaining unit.

10. The apparatus according to claim 8 or 9, wherein the identification module further comprises:
an obtaining unit, configured to obtain time of transmitting the ultrasonic wave from each ultrasonic transmitter to each ultrasonic receiver according to the time of sending the ultrasonic wave by each ultrasonic transmitter obtained by the first obtaining module and the time of receiving the ultrasonic wave that each ultrasonic transmitter sends by each ultrasonic receiver obtained by the second obtaining module;
a determination unit, configured to determine a distance between each ultrasonic transmitter and each ultrasonic receiver according to the time of transmitting the ultrasonic wave from each ultrasonic transmitter to each ultrasonic receiver obtained by the obtaining unit and transmission speed of the ultrasonic wave; and
an identification unit, configured to identify the posture of the object to be identified according to the distance between each ultrasonic transmitter and each ultrasonic receiver determined by the determination unit.
